(19) **Europäisches Patentamt / European Patent Office / Office européen des brevets**

(11) **EP 4 542 015 A1**

(12) **EUROPEAN PATENT APPLICATION**
published in accordance with Art. 153(4) EPC

(43) Date of publication:
23.04.2025 Bulletin 2025/17

(21) Application number: 23826296.8

(22) Date of filing: 16.06.2023

(51) International Patent Classification (IPC):
$F01P\ 11/16^{(2006.01)}$    $F02D\ 45/00^{(2006.01)}$
$G06F\ 30/20^{(2020.01)}$

(52) Cooperative Patent Classification (CPC):
F01P 11/00; F01P 11/16; F02D 45/00; G06F 30/20

(86) International application number:
PCT/CN2023/100730

(87) International publication number:
WO 2023/246647 (28.12.2023 Gazette 2023/52)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 20.06.2022 CN 202210695448

(71) Applicant: Beijing Co Wheels Technology Co., Ltd.
Beijing 101300 (CN)

(72) Inventors:
• ZHANG, Hongyang
Beijing 101300 (CN)
• MENG, Ying
Beijing 101300 (CN)
• LIU, Kaifeng
Beijing 101300 (CN)
• MA, Chunshan
Beijing 101300 (CN)
• XUE, Jian
Beijing 101300 (CN)
• MENG, Yue
Beijing 101300 (CN)
• NING, Yunpeng
Beijing 101300 (CN)

(74) Representative: Maiwald GmbH
Elisenhof
Elisenstraße 3
80335 München (DE)

(54) **METHOD, APPARATUS AND DEVICE FOR PREDICTING TEMPERATURE OF COOLING SYSTEM OF ENGINE, AND MEDIUM AND VEHICLE**

(57) Provided are a method, apparatus and device for predicting the temperature of a cooling system of an engine, and a medium, a vehicle, a computer program product and a computer program. The method comprises: acquiring a first temperature of a cooling system of an engine at an initial moment, a working condition parameter of the engine, and a target moment, wherein the cooling system comprises at least cooling water, an inner cylinder wall and an outer cylinder wall; and according to the first temperature and the working condition parameter of the engine, obtaining a target temperature of the cooling system of the engine at the target moment.

obtaining a first temperature of the cooling system of the engine at an initial time moment, operating condition parameters of the engine, and a target time moment — step 110

↓

obtaining a target temperature of the cooling system of the engine at the target time moment according to the first temperature and the operating condition parameters of the engine — step 120

FIG. 1

**Description**

**CROSS-REFERENCE TO RELATED APPLICATIONS**

This application is based on and claims priority to Chinese patent application No. 202210695448.4, filed on June 20, 2022, the entire contents of which are incorporated herein by reference.

**TECHNICAL FIELD**

The present disclosure relates to a technical field of thermal management, and in particular, to a method, an apparatus and a device for predicting a temperature of a cooling system of an engine, a medium, a vehicle, a computer program product, and a computer program.

**BACKGROUND TECHNOLOGY**

An automobile thermal management system needs to automatically adjust a cooling strength to enable corresponding components to operate within an optimal temperature range according to an operating condition and an environmental condition of an automobile, specifically to keep an engine operating within a corresponding optimal temperature range.

At present, in order to maintain the engine to operate within the optimal temperature range, temperatures of the engine at different time moments can be calculated through a constructed temperature prediction model, but existing models are slow in calculation speed and low in accuracy.

**SUMMARY**

An objective of the present disclosure is to provide a method and an apparatus for predicting a temperature of a cooling system of an engine, a device, a medium, a vehicle, a computer program product, and a computer program, to achieve an effect of quickly and accurately predicting the temperature of the cooling system of the engine.

According to a first aspect, a method for predicting a temperature of a cooling system of an engine is provided in an embodiment of the present disclosure, and the method includes:

obtaining a first temperature of the cooling system of the engine at an initial time moment, operating condition parameters of the engine, and a target time moment; in which the cooling system includes at least cooling water, an inner cylinder wall and an outer cylinder wall; and

obtaining a target temperature of the cooling system of the engine at the target time moment according to the first temperature and the operating condition parameters of the engine.

According to a second aspect, an apparatus for predicting a temperature of a cooling system of an engine is provided in an embodiment of the present disclosure, and the apparatus includes:

an obtaining module, configured to obtain a first temperature of the cooling system of the engine at an initial time moment, operating condition parameters of the engine and a target time moment; in which the cooling system includes at least cooling water, an inner cylinder wall and an outer cylinder wall; and

a first determining module, configured to obtain a target temperature of the engine cooling system at the target time moment according to the first temperature and the operating condition parameters of the engine.

According to a third aspect, a device for predicting a temperature of a cooling system of an engine is provided in an embodiment of the present disclosure. The device includes a processor and a memory storing computer program instructions; and when the processor executes the computer program instructions, the processor implements steps of the method for predicting the of temperature of the cooling system of the engine according to any embodiment of the first aspect in the present disclosure.

According to a fourth aspect, a computer readable storage medium is provided in an embodiment of the present disclosure, in which the computer readable storage medium stores computer program instructions that when executed by a processor, implement steps of the method for predicting the temperature of the cooling system of the engine according to any embodiment of the first aspect in the present disclosure.

According to a fifth aspect, a vehicle is provided in an embodiment of the present disclosure, the vehicle includes at least one of:

the apparatus for predicting the temperature of the cooling system of the engine according to any embodiment of the first aspect of the present disclosure;

the device for predicting the temperature of the cooling system of the engine according to any embodiment of the second aspect of the present disclosure; or

the computer readable storage medium according to any one embodiment of the third aspect the present disclosure.

According to a sixth aspect, a computer program product including a computer program is further provided in an embodiment of the present disclosure, and the computer program is configured to execute the method for predicting the of temperature of the cooling system of the engine of any embodiment of the first aspect of the present disclosure when executed by a processor.

According to a seventh aspect, a computer program including computer program codes is further provided in an embodiment of the present disclosure, when the computer program codes are running on a computer, the computer is caused to execute the method for predicting the of temperature of the cooling system of the engine of any embodiment of the first aspect of the present disclosure.

The technical solution according to embodiments of the present disclosure at least brings the following beneficial effect.

With the method for predicting the temperature of the cooling system of the engine provided in the embodiments of the present disclosure, by obtaining a first temperature of the cooling system of the engine at an initial time moment and operating condition parameters of the engine, a target temperature of the cooling system of the engine at a target time moment can be obtained. Therefore, when calculating the target temperature of the cooling system of the engine at the target time moment, there is no need to consider a cylinder wall roughness of the engine or other immeasurable parameters caused by use of the engine. Therefore, a calculated target temperature of the cooling system of the engine at the target time moment is more accurate. When calculating the target temperature of the cooling system of the engine at the target time moment, only the first temperature of the cooling system of the engine at the initial time moment and the operating condition parameters of the engine need to be considered, without relying on too many other parameters, which saves calculation time, and improves a calculation efficiency of the target temperature of the cooling system of the engine at the target time moment.

It should be understood that the above general descriptions and following detailed descriptions are only illustrative and descriptive, and may not be a limitation of the present disclosure.

## BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification, and do not constitute an incorrect limitation of the present disclosure.

FIG. 1 is a flowchart of a method for predicting a temperature of a cooling system of an engine according to an embodiment of the first aspect of the present disclosure.

FIG. 2 is a diagram of a process of each iterative calculation according to an embodiment of the first aspect of the present disclosure.

FIG. 3 is a diagram of a double-layer tablet model of an engine according to an embodiment of the first aspect of the present disclosure.

FIG. 4 is a block diagram of an apparatus for predicting a temperature of a cooling system of an engine according to an embodiment of the second aspect of the present disclosure.

FIG. 5 is a block diagram of a device for predicting a temperature of a cooling system of an engine according to an embodiment of the third aspect of the present disclosure.

## DETAILED DESCRIPTION

In order to understand the above objects, features and advantages of the present disclosure more clearly, the solutions of the present disclosure will be further described below. It should be noted that, in the case of no conflict, the embodiments of the present disclosure and the features in the embodiments may be combined with each other.

In the following description, numerous specific details are set forth in order to fully understand the present disclosure, but the present disclosure may also be implemented in other manners other than those described herein. Obviously, the embodiments in the specification are only a part of the embodiments of the present disclosure, rather than all the embodiments.

Before introducing the technical solutions of the present disclosure, the background technology of the present disclosure is first introduced in the following.

At present, in order to maintain an engine to operate within an optimal temperature range, a temperature prediction model may be constructed, which may be two types of models, i.e., a physical model and a fitting model, in some specific embodiments, to calculate temperatures of the engine at different time moments. However, the existing physical model and fitting model have the following defects.

For the physical model, the existing physical model is calculated based on a time and space step. In some specific embodiments, an inner cylinder wall of the engine to be calculated may be divided into several sections from an inner side of the inner cylinder wall to an outer side of the inner cylinder wall. A temperature of each section from the inner side of the inner cylinder wall to the outer side of the inner cylinder wall is calculated sequentially until the temperature of the outer side of the inner cylinder wall is calculated. However, in an actual application process, a user only wants to know the temperature of the outer side of the inner cylinder wall, and does not need to know temperatures of middle sections from the inner side of the inner cylinder wall to the outer side of the inner cylinder. The above physical model needs to calculate temperatures of many middle sections, resulting in a slow calculation speed. In addition, when the physical model predicts the temperature, characteristic parameters, such as a cylinder wall roughness and a cylinder wall diameter, of the cooling system of the engine are required. But in the actual application process of the engine, due to water stains and other factors, the cylinder wall roughness may be changed, and the cylinder wall roughness of different engines may be different. In such calculation process, cylinder wall roughness of engines to be predicted needs to be obtained one by one, which affects calculation efficiency. Further, the physical model can only reflect a commonality of the engines and cannot simulate individualities of the engines. In an actual application process, calculation is generally performed according to the cylinder wall roughness recorded in a specification of the engine. But after the engine is used, an actual cylinder wall roughness of the engine may be inconsistent with the cylinder wall roughness recorded in the specification, so that the calculated temperature may not be accurate enough.

For the fitting model, a large amount of experimental data needs to be trained and simulated, which consumes time and labor. Moreover, an engine system has a high nonlinear degree, a model precision is difficult to reach a high degree. The fitting model can only simulate operating conditions within a training data boundary, a prediction capability is poor, a model robustness is poor, and a physical process cannot be reflected, so that errors for some operating conditions are difficult to rectify, the fitting model is suitable for a steady-state or static model, but has a poor dynamic performance.

In order to solve the above problems, a method for predicting the temperature of the cooling system of the engine is provided in the embodiments of the present disclosure. By obtaining a first temperature of the cooling system of the engine at an initial time moment and operating condition parameters of the engine, a target temperature of the cooling system of the engine at a target time moment can be obtained. Therefore, when calculating the target temperature of the cooling system of the engine at the target time moment, there is no need to consider the cylinder wall roughness of the engine or other immeasurable parameters caused by use of the engine. Therefore, a calculated target temperature of the cooling system of the engine at the target time moment is more accurate. When calculating the target temperature of the cooling system of the engine at the target time moment, only the first temperature of the cooling system of the engine at the initial time moment and the operating condition parameters of the engine need to be considered, without relying on too many other parameters, which saves calculation time, and improves a calculation efficiency of the target temperature of the cooling system of the engine at the target time moment.

The method for predicting a temperature of a cooling system of an engine provided in the embodiments of the present disclosure will be described in detail below with reference to the accompanying drawings through specific embodiments and application scenarios thereof.

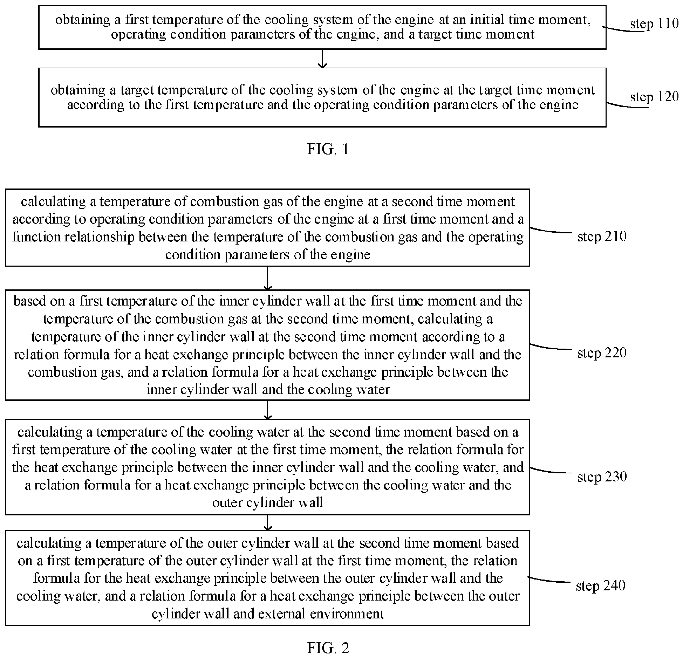

FIG. 1 is a flowchart of a method for predicting a temperature of a cooling system of an engine according to an embodiment of the present disclosure. An execution body of the method for predicting a temperature of a cooling system of an engine may be a server. It should be noted that the above-mentioned execution body does not constitute a limitation to the present disclosure.

As shown in FIG. 1, the method for predicting a temperature of a cooling system of an engine according to the embodiment of the present disclosure includes steps 110 to 120.

At step 110, a first temperature of the cooling system of the engine at an initial time moment, operating condition parameters of the engine, and a target time moment are obtained.

The cooling system may include at least cooling water, an inner cylinder wall, and an outer cylinder wall.

At step 120, a target temperature of the cooling system of the engine at the target time moment is obtained according to the first temperature and the operating condition parameters of the engine.

In the embodiments of the present disclosure, by obtaining a first temperature of the cooling system of the engine at an initial time moment and the operating condition parameters of the engine, a target temperature of the cooling system of the engine at a target time moment can be obtained. Therefore, when calculating the target temperature of the cooling system of the engine at the target time moment, there is no need to consider the cylinder wall roughness of the engine or other immeasurable parameters caused by use of the engine. Therefore, a calculated target temperature of the cooling system of the engine at the target time moment is more accurate. When calculating the target temperature of the cooling system of the engine at the target time moment, only the first temperature of the cooling system of the engine at the initial time moment and the operating condition parameters of the engine need to be considered, without relying on too many other parameters, which saves calculation time, and improves a calculation efficiency of the target temperature of the cooling system of the engine at the target time moment.

The method for predicting a temperature of a cooling system of an engine provided by the embodiments of the present disclosure is described in detail below.

First, step 110 of obtaining the first temperature of the cooling system of the engine at the initial time moment, the operating condition parameters of the engine, and the target time moment is introduced.

The cooling system may include at least cooling water, the inner cylinder wall, and the outer cylinder wall.

The initial time moment may be a time moment at which the prediction of the temperature of the cooling system of the engine starts.

The first temperature may be a temperature of the cooling system of the engine at the initial time moment.

The operating condition parameters may be parameters indicating an operating condition of the engine. In some specific embodiments, the operating condition parameters may be a rotational speed and a torque of the engine.

The target time moment may be a time moment when the temperature of the cooling system of the engine needs to be predicted.

In an example, if the temperature of the cooling system of the engine within future 1 hour starting from 8 a.m. on April 18, 2022 is expected to be predicted, then 8 a.m. on April 18, 2022 is the initial time moment, and the time 1 hour after the initial time moment (that is, 9 a.m. on April 18, 2022) is the target time moment.

In some embodiments of the present disclosure, the first temperature of the cooling system of the engine at the initial time moment and the operating condition parameters of the engine may be obtained based on a sensor in the engine, or may be obtained in real time, and a specific obtaining manner is not limited herein.

Finally, step 120 of obtaining the target temperature of the cooling system of the engine at the target time moment according to the first temperature and the operating condition parameters of the engine is introduced.

The target temperature may be a temperature of the cooling system of the engine at the target time moment obtained according to the first temperature and the operating condition parameters of the engine.

In some embodiments of the present disclosure, in order to further improve the calculation efficiency of the target temperature of the cooling system of the engine at the target time moment, step 120 may specifically include steps 1201 and 1202.

At step 1201, a number i of unit time steps required from the initial time moment to the target time moment is determined according to the preset unit time step.

At step 1202, i iteration calculations are performed according to the first temperature and the operating condition parameters of the engine to obtain the target temperature of the cooling system of the engine at the target time moment.

Where i is a positive integer.

The preset unit time step may be a pre-set unit time step. In some embodiments, the unit time step may be 5 minutes or 10 minutes. In some specific embodiments, the unit time step may be set according to a user requirement, which is not limited herein.

With continued reference to the above example, the initial time moment is 8 a.m. on April 18, 2022, and the target time moment is 9 a.m. on April 18, 2022. That is, a total time from the initial time moment to the target time moment is 60 minutes. If the preset unit time step is 5 minutes, the number of the unit time steps required from the initial time moment to the target time moment is i = 60/5 = 12.

In the embodiments of the present disclosure, by obtaining the number i of unit time steps required from the initial time moment to the target time moment, and performing i iteration calculations according to the first temperature of the cooling system of the engine at the initial time moment and the operating condition parameters of the engine, a target temperature of the cooling system of the engine at a target time moment can be obtained. Therefore, when calculating the target temperature of the cooling system of the engine at the target time moment, there is no need to consider the cylinder wall roughness of the engine or other immeasurable parameters caused by use of the engine. Therefore, a calculated target temperature of the cooling system of the engine at the target time moment is more accurate. When calculating the target temperature of the cooling system of the engine at the target time moment, only the first temperature of the cooling system of the engine at the initial time moment and the operating condition parameters of the engine need to be considered, without relying on too many other parameters, which saves the calculation time, and improves the calculation efficiency of the target temperature of the cooling system of the engine at the target time moment.

In some embodiments of the present disclosure, in order to further improve the calculation efficiency of the target temperature of the cooling system of the engine at the target time moment, as shown in FIG. 2, each iteration calculation in step 1202 may include steps 210 to 240.

At step 210, a temperature of combustion gas of the engine at a second time moment is calculated according to the operating condition parameters of the engine at a first time moment and a function relationship between the temperature of the combustion gas and the operating condition parameters of the engine.

The function relationship between the temperature of the combustion gas and the operating condition parameters of the engine may be obtained by performing fitting based on a double-layer flat plate model corresponding to the engine.

In some embodiments of the present disclosure, the first time moment may be the initial time moment, or may be a certain time moment between the initial time moment and the target time moment. An initial value of the first time moment may be the initial time moment.

The second time moment may be a time moment corresponding to a time having one unit time step after the first time moment. The first time moment and the second time moment may be separated by one unit time step.

With continued reference to the above example, the initial time moment is 8 a.m. on April 18, 2022, and the target time moment is 9 a.m. on April 18, 2022. If the preset unit time step is 5 minutes, the first time moment is 8:30 a.m. on April 18, 2022, and the second time moment may be 8:35 a.m. on April 18, 2022.

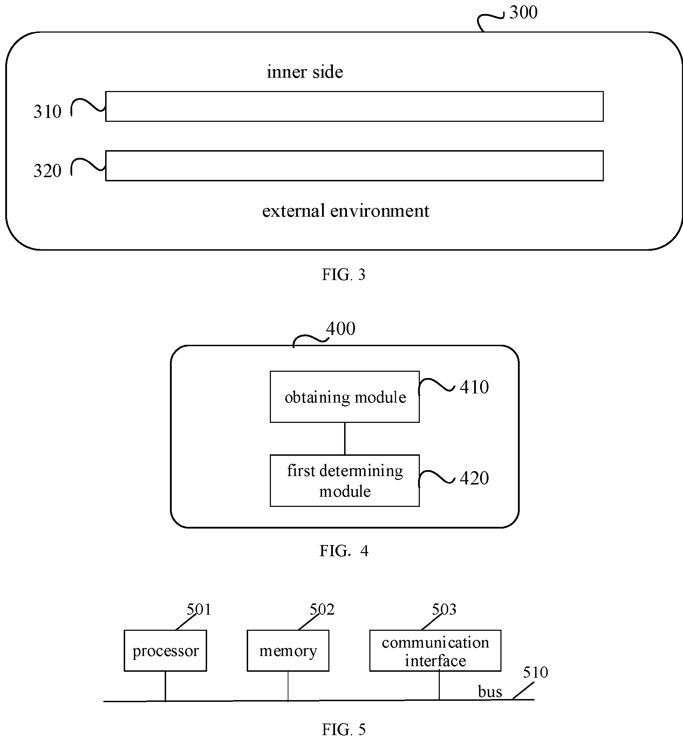

In some embodiments of the present disclosure, a heat exchange model of the engine may be simplified. In some specific embodiments, the heat exchange model of the engine may be simplified into a double-layer flat plate heat exchange model (as shown in FIG. 3). In FIG. 3, an inner side of the engine 300 is the combustion gas (not shown in the figure), and cooling water (not shown in the figure) is provided between the inner cylinder wall 310 and the outer cylinder wall 320. After the combustion gas is combusted, heat flows into the inner cylinder wall 310 through convective heat exchange, and the inner cylinder wall is heated. The inner cylinder wall heats the cooling water, a temperature rises after the cooling water obtains energy, and the outer cylinder wall 320 is heated. Meanwhile natural convective heat exchange occurs between the outer cylinder wall and external environment.

In subsequent embodiments of the present disclosure, it may be assumed that a cylinder head and the inner cylinder wall are integrated, there is no heat conduction between the cylinder head and the outer cylinder wall, the cylinder wall may be uniformly heated, so that the internal temperature difference is not considered.

In some embodiments of the present disclosure, the function relationship between the temperature of the combustion gas and the operating condition parameters of the engine may be the following formula (1):

$$T_{gas} = a * n^2 - b * T^2 - c * n * T + d * n + f * T + h \qquad (1)$$

In the formula (1), $T_{gas}$ represents a virtual combustion temperature; n represents a rotational speed of the engine, and T represents a torque of the engine; and *a, b, c, d, f* and *h* are all constants, which are determined based on a model of the engine.

In some embodiments of the present disclosure, each constant in the above formula (1) may be *a*=-9.04e-08, *b*=0.000844, *c*=7.737e-0.5, *d*=0.0178, *f*=0.552, and *h*=91.043.

In some embodiments of the present disclosure, under a steady-state condition, the engine has reached a stable higher temperature, so that an intake temperature for initial combustion is higher than an intake temperature for cold start. In order to better fit the intake temperature for the cold start, this phenomenon is corrected by using temperatures of inlet water to represent different cold start stages. The formula (1) is corrected to obtain a formula (2).

$$T_{gas} = (a * n^2 - b * T^2 - c * n * T + d * n + f * T + h)^{\frac{T_{w,in}}{T_{w,in,measure}}} \qquad (2)$$

In the formula (2), $T_{w,in}$ represents the intake temperature for the cold start; and $T_{w,in,measure}$ represents the intake temperature for the initial combustion.

It should be noted that all the temperatures in a corrected formula (that is, formula (2)) are Kelvin temperatures.

In some embodiments of the present disclosure, in order to further improve accuracy and efficiency of prediction of the temperature of the cooling system of the engine, before step 110, the above-mentioned method for predicting the temperature of the cooling system of the engine may further include:

performing fitting on historical operating condition parameters of the engine and a heat exchange coefficient between the historical operating condition parameters and the combustion gas to obtain a first correspondence relation formula of a heat exchange coefficient between the operating condition parameters of the engine and the combustion gas;

performing fitting on mass flow of the cooling water and a heat performing coefficient between the mass flow of the cooling water and a cylinder wall of the engine to obtain a second correspondence relation formula of the heat performing coefficient between the mass flow of the cooling water and the cylinder wall of the engine;

based on the double-layer flat plate model corresponding to the engine, performing fitting on the first correspondence relation formula and the second correspondence relation formula according to a steady-state heat exchange conservation formula between the cooling water in the engine and the combustion gas to obtain the function relationship between the temperature of the combustion gas and the operating condition parameters of the engine.

The historical operating condition parameters may be operating condition parameters of the engine before the temperature of the cooling system of the engine is predicted.

The first correspondence relation formula may be a relation formula of the heat exchange coefficient between the operating condition parameters of the engine and the combustion gas.

The second correspondence relation formula may be a relation formula of the heat exchange coefficient between the mass flow of the cooling water and the cylinder wall of the engine.

In some embodiments of the present disclosure, fitting may be performed on the historical operating condition parameters of the engine and the heat exchange coefficient between the historical operating condition parameters and the combustion gas, to obtain the first correspondence relation formula of the heat exchange coefficient between the operating condition parameters of the engine and the combustion gas, as shown in formula (3).

$$\alpha 1 = (a1 * n^2 - b1 * T^2 - c1 * n * T + d1 * n + f1 * T + h1) \qquad (3)$$

In the formula (3), $\alpha 1$ represents the heat exchange coefficient between the operating condition parameters of the engine and the combustion gas; n represents the rotational speed of the engine, and $T$ represents the torque of the engine; and $a1$, $b1$, $c1$, $d1$, $f1$ and $h1$ are all constants, which are determined based on the model of the engine.

In some embodiments of the present disclosure, each constant in the above formula (3) may be $a1$=-6.048e-07, $b1$=0.00028, $c1$=0.000143, $d1$=0.0497, $f1$=0.00868, and $h1$=35.6212.

In some embodiments of the present disclosure, fitting may be performed on the mass flow of the cooling water and the heat exchange coefficient between the mass flow of the cooling water and the cylinder wall of the engine to obtain the second correspondence relation formula of the heat exchange coefficient between the mass flow of the cooling water and the cylinder wall of the engine, as shown in formula (4).

$$\alpha 2 = (a2 * \dot{m}^2 + b2 * \dot{m} + c2) \qquad (4)$$

In the formula (4), $\alpha 2$ represents the heat exchange coefficient between the mass flow of the cooling water and the cylinder wall of the engine; $\dot{m}$ represents the mass flow of cooling water of the engine, $a2$, $b2$ and $c2$ are all constants, which are determined based on the model of the engine.

In some embodiments of the present disclosure, each constant in the foregoing formula (3) may be $a2$=-2561.3, $b2$=186.6, and $c2$=971.9.

In some embodiments of the present disclosure, after the first correspondence relation formula and the second correspondence relation formula are obtained, based on the double-layer flat plate model corresponding to the engine, filling may be performed on the first correspondence relation formula and the second correspondence relation formula according to the steady-state heat exchange conservation formula between the cooling water in the engine and the combustion gas to obtain the function relationship between the temperature of the combustion gas and the operating condition parameters of the engine.

In the embodiment of the present disclosure, by calculating the heat exchange coefficient between the engine and the cooling system, the function relationship between the temperature of the combustion gas and the operating condition parameters of the engine can be calculated based on the heat exchange coefficient, other redundant calculation is not needed, the calculation efficiency of the function relationship between the temperature of the combustion gas and the operating condition parameters of the engine is improved, and then an efficiency of prediction of the temperature of the cooling system of the engine is improved. When the heat exchange coefficient between the engine and the cooling system is calculated, the calculation is only based on the operating condition parameters of the engine and the mass flow of the cooling water, without considering other imprecise parameters such as a cylinder wall roughness, so that the accuracy of the prediction of the temperature of the cooling system of the engine is improved.

In some embodiments of the present disclosure, in order to further improve the accuracy and efficiency of the prediction of the temperature of the cooling system of the engine, based on the double-layer flat plate model corresponding to the engine, performing fitting on the first correspondence relation formula and the second correspondence relation formula according to the steady-state heat exchange conservation formula between the cooling water in the engine and the combustion gas to obtain the function relationship between the temperature of the combustion gas and the operating condition parameters of the engine may specifically include:

performing fitting on the first correspondence relation formula and the second correspondence relation formula based on a heat exchange area between the inner cylinder wall and the combustion gas, a heat exchange area between the inner cylinder wall and the cooling water and a thermal conduction area of the inner cylinder wall, to obtain a heat conduction thermal resistance relation formula of the engine;
based on the heat conduction thermal resistance relation formula and the double-layer flat plate model corresponding to the engine, performing an integral on a length from an inlet to an outlet of the inner cylinder wall in the engine according to the steady-state heat exchange conservation formula between the cooling water in the engine and the combustion gas, to obtain a third relation formula among the combustion gas, an inlet temperature of the cooling water and an outlet temperature of the cooling water; and

performing quadratic function fitting on the third relation formula and the operating condition parameters of the engine, to obtain the function relationship between the temperature of the combustion gas and the operating condition parameters of the engine.

The third relation formula can be a correspondence relation formula among the combustion gas, the inlet temperature of the cooling water and the outlet temperature of cooling water.

In some of the implementations disclosed in the present disclosure, in the steady-state process, the temperature of the outer cylinder wall of the engine is very close to the temperature of the cooling water. Therefore, it can be considered that heat exchange quantity between the cooling water and the outer cylinder wall is small, which has little effect on a temperature change of the cooling water. When considering the temperature change of the cooling water, heat exchange between cooling water and inner cylinder wall is mainly considered. The fitting is performed on the first correspondence relation formula and the second correspondence relation formula based on the heat exchange area between the inner cylinder wall and the combustion gas, the heat exchange area between the inner cylinder wall and the cooling water and the thermal conduction area of the inner cylinder wall, and according to a steady-state heat exchange series heat exchange formula, the heat conduction thermal resistance relation formula of the engine is obtained, as shown in formula (5).

$$Q = \left(T_{gas} - T_w\right)/\left(\frac{1}{\frac{1}{\alpha 1 * A1} + \frac{1}{\lambda 1 * A2} + \frac{1}{\alpha 2 * A3}}\right) \qquad (5)$$

In the formula (5), $T_{gas}$ represents the temperature of the combustion gas; $T_w$ represents the temperature of the cooling water; A1 represents the heat exchange area between the combustion gas and the inner cylinder wall; A2 represents the thermal conduction area of the inner cylinder wall; A3 represents the heat exchange area between the inner cylinder wall and the cooling water; $\lambda 1$ represents a thermal conductive coefficient (a constant which is related to the material of the inner cylinder wall) of the inner cylinder wall; $\alpha 1$ represents the heat exchange coefficient between the operating condition parameters and the combustion gas; $\alpha 1$ represents the heat exchange coefficient between the mass flow of the cooling water and the cylinder wall of the engine.

In some embodiments of the present disclosure, in order to simplify the calculation, let A1 = A2 = A3, $\alpha = 1/(\frac{1}{\alpha 1} + \frac{1}{\lambda 1} + \frac{1}{\alpha 2})$, then formula (6) can be obtained.

$$Q = \alpha * A * \left(T_{gas} - T_w\right) \qquad (6)$$

In the formula (5), $\alpha = 1/(\frac{1}{\alpha 1} + \frac{1}{\lambda 1} + \frac{1}{\alpha 2})$; A1=A2=A3=A; $T_{gas}$ represents the temperature of the combustion gas; and $T_w$ represents the temperature of the cooling water.

According to steady-state heat exchange conservation formulas (7) and (8), the formulas (7) and (8) are combined, and an integral is performed on the length from the inlet of the inner cylinder wall to the outlet of the inner cylinder wall in the engine to obtain the third relation formula (i.e. formula (9)) among the combustion gas, the inlet temperature of the cooling water and the outlet temperature of the cooling water.

$$Q = \dot{m} * C_p * dT_w \qquad (7)$$

In the formula (7), $C_p$ represents a specific heat of the cooling water at a constant pressure; m represents the mass flow of the cooling water in the engine; $dT_w$ represents a difference between the inlet temperature and the outlet temperature of the cooling water.

$$Q = \alpha * dA * \left(T_{gas} - T_w\right) = \alpha * L_c * dx * \left(T_{gas} - T_w\right) \qquad (8)$$

In the formula (8), $L_c$ represents a characteristic length of a heat exchange component (the inner cylinder wall, the cooling water, the combustion gas and the outer cylinder wall), which represents the heat exchange area per unit length, $x$ represents a length of the heat exchange component; $\alpha = 1/(\frac{1}{\alpha 1} + \frac{1}{\lambda 1} + \frac{1}{\alpha 2})$ ; $T_{gas}$ represents the temperature of the combustion gas; $T_w$ represents the temperature of the cooling water.

$$\frac{T_{gas} - T_{w,\ out}}{T_{gas} - T_{w,in}} = e^{-\frac{\alpha * A}{m * C_p}} \tag{9}$$

In the formula (9), $T_{gas}$ represents the temperature of the combustion gas; $T_{w,\ out}$ represents an outlet water temperature of the cooling water; $T_{w,in}$ represents an inlet water temperature of the cooling water; m represents the mass of water; A1=A2=A3=A; $\alpha = 1/(\frac{1}{\alpha 1} + \frac{1}{\lambda 1} + \frac{1}{\alpha 2})$ ; $C_p$ represents the specific heat of the cooling water at the constant pressure.

For ease of calculation, let $N = e^{-\frac{\alpha * A}{m * C_p}}$ . In this way, the formula (9) can be deformed to obtain formula (10).

$$T_{gas} = \left(T_{w,\ out} - N * T_{w,in}\right)/(1 - N) \tag{10}$$

In the formula (10), $T_{gas}$ represents the temperature of the combustion gas; $T_{w,\ out}$ represents the outlet water temperature of the cooling water; $T_{w,in}$ represents the inlet water temperature of the cooling water.

In this way, steady-state experimental data of an experiment can be obtained to calculate a corresponding $T_{gas}$ of each operating condition, so as to obtain the correspondence among the rotational speed, the torque and the temperature of the combustion gas.

It should be noted that a combustion temperature of the combustion gas in the engine changes with a stroke. However, due to thermal inertia of the cylinder, the temperature of the inner cylinder wall does not change much. Therefore, it can be assumed that combustion acts on the inner cylinder wall of the engine with an average temperature within four strokes. After the formula (10) is obtained, quadratic function fitting is performed on the formula (10) and the operating condition parameters of the engine, and the function relationship between the temperature of the combustion gas and the operating condition parameters of the engine can be obtained, as shown in the above formula (1).

In the embodiments of the present disclosure, by performing fitting on the first correspondence relation formula and the second correspondence relation formula according to the heat exchange area between the inner cylinder wall and the combustion gas, the heat exchange area between the inner cylinder wall and the cooling water and the thermal conduction area of the inner cylinder wall, the heat conduction thermal resistance relation formula of the engine is obtained. Based on the heat conduction thermal resistance relation formula, the third relation formula among the combustion gas, the inlet temperature of the cooling water and the outlet temperature of the cooling water is obtained according to the steady-state heat exchange conservation formula between the cooling water in the engine and the combustion gas. The quadratic function fitting is performed on the third relation formula and the operating condition parameters of the engine, to obtain the function relationship between the temperature of the combustion gas and the operating condition parameters of the engine. In this way, in the process of obtaining the function relationship between the temperature of the combustion gas and the operating condition parameters of the engine, only the heat exchange area between the inner cylinder wall and the combustion gas, the heat exchange area between the inner cylinder wall and the cooling water, and the thermal conduction area of the inner cylinder wall are considered, without considering other inaccurate parameters, thus an accurate function relationship between the temperature of the combustion gas and the operating condition parameters of the engine can be obtained, which improves the accuracy of prediction of the temperature of the cooling system of the engine. In addition, in the calculation process, it is not necessary to calculate temperatures of middle parts of a heat exchange component, only a temperature of the inlet of the heat exchange component and a temperature of the outlet of the heat exchange component are calculated. In this way, a computational efficiency of the function relationship between the temperature of the combustion gas and the operating condition parameters of the engine is improved, and thus the efficiency of the prediction of the temperature of the cooling system of the engine is improved.

At step 220, based on a first temperature of the inner cylinder wall at the first time moment and the temperature of the combustion gas at the second time moment, the temperature of the inner cylinder wall at the second time moment is calculated according to a relation formula for a heat exchange principle between the inner cylinder wall and the combustion gas, and a relation formula for a heat exchange principle between the inner cylinder wall and the cooling water.

In some embodiments of the present disclosure, in order to accurately determine the temperature of the inner cylinder wall at the second time moment, step 220 may include:

based on the first temperature of the inner cylinder wall at the first time moment and the temperature of the combustion gas, calculating a second temperature of the inner cylinder wall after heat transfer through the combustion gas according to the relation formula for the heat exchange principle between the inner cylinder wall and the combustion gas;

calculating a third temperature of the inner cylinder wall after heat transfer from the inner cylinder wall to the cooling water based on the second temperature, a first heat exchange quantity between the inner cylinder wall and the cooling water, and the relation formula for the heat exchange principle between the inner cylinder wall and the cooling water; and

taking the third temperature as the temperature of the inner cylinder wall at the second time moment.

The second temperature may be a temperature of the inner cylinder wall after the heat transfer through the combustion gas.

The first heat exchange quantity can be the heat exchange quantity between the inner cylinder wall and the cooling water.

The third temperature can be the temperature of the inner cylinder wall after the heat transfer from the inner cylinder wall to the cooling water, which is the temperature of the inner cylinder wall at the second time moment.

In some embodiments of the present disclosure, the relation formula for the heat exchange principle between the inner cylinder wall and the combustion gas is shown as the above formula (6). where, $T_{gas}$ may represent the temperature of the combustion gas at the second time moment, $T_w$ is obtained temperature of the inner cylinder wall at the first time moment, so that heat exchange quantity Q between the inner cylinder wall and the combustion gas can be obtained.

Then, according to a deformation of the above formula (7), the second temperature of the inner cylinder wall after the heat transfer through the combustion gas can be calculated according to heat exchange quantity Q between the inner cylinder wall and the combustion gas and the first temperature of the inner cylinder wall at the first time moment.

It should be noted that since formula (7) is a steady-state heat exchange conservation formula of the cooling water. The temperature obtained is the temperature of the inner cylinder wall in this case. Therefore, the steady-state heat exchange conservation formula of the cooling water in the formula (7) can be changed to the steady-state heat exchange conservation formula of the inner cylinder wall. In some specific embodiments, $\dot{m}$ in the formula (7) can be replaced by the mass of the inner cylinder wall, $C_p$ is replaced with the specific heat of the inner cylinder wall, and $dT_w$ is replaced with $dT_B$, $dT_B$ represents a difference between the first temperature of the inner cylinder wall at the first time moment and the second temperature of the inner cylinder wall after the heat transfer through the combustion gas.

In this way, the second temperature of the inner cylinder wall after the heat transfer through the combustion gas can be obtained based on the deformation of formula (7).

Then for the cooling water, heat quantity in a tiny volume is determined from formula (11):

$$\mathrm{dQ} = \mathrm{dQ1} - \mathrm{dQ2} = \alpha 3 * L_{c1} * \left(T_B - T_{w,x}\right)dx - \alpha 4 * L_{c2} * \left(T_{w,x} - T_{WB}\right)dx \qquad (11)$$

$$= \dot{m} * C_p * dT_{w,x}$$

In the formula (11), Q1 represents the heat exchange quantity between the cooling water and the inner cylinder wall; Q2 represents the heat exchange quantity between the cooling water and the outer cylinder wall; $\alpha 3$ represents a heat exchange coefficient between the cooling water and the inner cylinder wall; $\alpha 4$ represents a heat exchange coefficient between the cooling water and the outer cylinder wall; $L_{c2}$ represents a characteristic length of the outer cylinder wall; $L_{c1}$ represents a characteristic length of the inner cylinder wall; $\dot{m}$ represents the mass flow of the cooling water of the engine; $C_p$ represents the specific heat of the cooling water at the constant pressure; $T_B$ represents the second temperature of the inner cylinder wall after the heat transfer through the combustion gas; $T_{w,x}$ represents the temperature of the cooling water at position x within the tiny volume; $T_{WB}$ represents a first temperature of the outer cylinder wall at the first time moment.

Then an integral is performed for the above formula (11) from 0 to x, and a temperature of the cooling water at position x can be obtained from formula (12):

$$T_{w,x} = a3(T_B - T_{WB})\left(1 - e^{-\frac{\alpha * A}{m * C_p}}\right) + e^{-\frac{\alpha * A}{m * C_p}} * T_{w,in} \qquad (12)$$

In the formula (12), $T_B$ represents the second temperature of the inner cylinder wall after the heat transfer through the combustion gas; $T_{WB}$ represents the first temperature of the outer cylinder wall at the first time moment; $\alpha$ represents the heat exchange coefficient between the cooling water and the cylinder wall (i.e., $\alpha2$ in the formula (4)); A represents the heat conduction area of the cylinder wall (since a heat conduction area of the inner cylinder wall is equal to a heat conduction area of the outer cylinder wall, A here may be the heat conduction area of the inner cylinder wall or the heat conduction area of the outer cylinder wall), m represents the mass of the cooling water; $C_p$ represents the specific heat of the cooling water at the constant pressure; a3 is a constant, in some specific embodiments, may be 0.5.

Therefore, the heat exchange quantity between the cooling water and the inner cylinder wall determined from formula (13):

$$Q1 = \int_0^L \alpha * L_c * \left(T_B - T_{w,x}\right)dx \qquad (13)$$

where, in the formula (13), $\alpha$ represents the heat exchange coefficient between the cooling water and the cylinder wall (i.e., $\alpha2$ in the formula (4)); $L_c$ represents the characteristic length of the inner cylinder wall; $T_B$ represents the second temperature of the inner cylinder wall after the heat transfer through the combustion gas; $T_{w,x}$ represents the temperature of the cooling water at position x.

Then the formula (12) is substituted into the formula (13), and a heat exchange formula (14) between the inner cylinder wall and the cooling water can be obtained:

$$Q1 = a3 * \alpha * A * (T_B - T_{WB}) + a3 * \dot{m} * C_p \left(1 - e^{-\frac{\alpha * A}{m * C_p}}\right) T_{w,in} - a4 * \dot{m} \qquad (14)$$

$$* C_p \left(1 - e^{-\frac{\alpha * A}{m * C_p}}\right)(T_B + T_{WB})$$

where, $\alpha$ represents the heat exchange coefficient between the cooling water and the cylinder wall (i.e., $\alpha2$ in the formula (4)); $L_c$ represents the characteristic length of the inner cylinder wall; $T_B$ represents the second temperature of the inner cylinder wall after the heat transfer through the combustion gas; $T_{WB}$ represents the first temperature of the outer cylinder wall at the first time moment; both a3 and a4 are constants, a3 = 0.5 and a4 = 0.25; A represents the heat conduction area of the cylinder wall (since the heat conduction area of the inner cylinder wall is equal to the heat conduction area of the outer cylinder wall, A here can be the heat conduction area of the inner cylinder wall or the heat conduction area of the outer cylinder wall), m represents the mass of the cooling water; $C_p$ represents the specific heat of the cooling water at the constant pressure; $\dot{m}$ represents the mass flow of the cooling water.

According to the formula (14), heat quantity from the inner wall to the cooling water is determined as Q1. According to the second temperature and the first heat exchange quantity from the inner cylinder wall to the cooling water, the third temperature of the inner cylinder wall after the heat transfer from the inner cylinder wall to the cooling water can be obtained according to formula (15), that is, the temperature of the inner cylinder wall at the second time moment.

$$\dot{Q} = m * C_p * dT_B \qquad (15)$$

where, in the formula (15), Q represents the heat quantity Q1 from the inner wall to the cooling water; m represents the area of the inner cylinder wall; $C_p$ represents the specific heat of the inner cylinder wall; $dT_B$ represents the difference between the second temperature of the inner cylinder wall after the heat transfer through the combustion gas and the third temperature of the inner cylinder wall after the heat transfer from the inner cylinder wall to the cooling water.

Therefore, based on the formula (15), the third temperature of the inner cylinder wall after the heat transfer from inner cylinder wall to the cooling water can be obtained.

In the embodiments of the present disclosure, based on the first temperature of the inner cylinder wall at the first time moment and the temperature of the combustion gas, the second temperature of the inner cylinder wall after the heat transfer through the combustion gas is calculated according to the relation formula for the heat exchange principle between the inner cylinder wall and the combustion gas. Then the third temperature of the inner cylinder wall after the heat transfer from the inner cylinder wall to the cooling water, i.e., the temperature of the inner cylinder wall at the second time moment, can be accurately calculated based on the second temperature, the first heat exchange quantity between the inner cylinder wall and the cooling water, and the relation formula for the heat exchange principle between the inner cylinder wall and the cooling water.

At step 230, a temperature of the cooling water at the second time moment is calculated based on a first temperature of the cooling water at the first time moment, the relation formula for the heat exchange principle between the inner cylinder wall and the cooling water, and the relation formula for the heat exchange principle between the cooling water and the outer cylinder wall.

In some embodiments of the present disclosure, in order to accurately calculate the temperature of the cooling water at the second time moment, step 230 specifically may include:

calculating a fourth temperature of the cooling water after the heat transfer from the inner cylinder wall to the cooling water based on the first temperature of the cooling water at the first time moment and the temperature of the inner cylinder wall at the second time moment, and the relation formula for the heat exchange principle between the inner cylinder wall and the cooling water;

calculating a fifth temperature of the cooling water after heat transfer from the cooling water to the outer cylinder wall based on the fourth temperature, the first temperature of the outer cylinder wall at the first time moment, and the relation formula for the heat exchange principle between the cooling water and the outer cylinder wall;

calculating a sixth temperature per unit volume of the cooling water after heat exchange with the inner cylinder wall and the outer cylinder wall based on the fourth temperature and the fifth temperature;

obtaining, for any position of the cooling water, a relation formula between the position of the cooling water and a temperature of the cooling water based on the sixth temperature; and

obtaining a temperature of an outlet position of the cooling water at the second time moment based on a temperature relation formula.

The fourth temperature may be the temperature of the cooling water after the heat transfer from the inner cylinder wall to the cooling water.

The fifth temperature may be the temperature of the cooling water after the heat transfer from the cooling water to the outer cylinder wall.

The sixth temperature may be the temperature per unit volume of the cooling water after the heat exchange with the inner cylinder wall and the outer cylinder wall.

In some embodiments of the present disclosure, in some specific embodiments, any position can be represented as x, and an integral may be performed on the sixth temperature from 0 to x to obtain the relation formula between position x of the cooling water and the temperature. In some embodiments of the present disclosure, based on the first temperature of the cooling water at the first time moment and the temperature of the inner cylinder wall at the second time moment, the fourth temperature of the cooling water after the heat transfer from the inner cylinder wall to the cooling water can be obtained according to the relation formula for the heat exchange principle between the inner cylinder wall and the cooling water in the formula (13).

Then the heat exchange quantity between the cooling water and the outer cylinder wall is determined from formula (16):

$$Q2 = \int_0^L \alpha * L_c * (T_{WB} - T_{w,x}) dx \qquad (16)$$

where, in the formula (16), $\alpha$ represents the heat exchange coefficient between the cooling water and the outer cylinder wall (i.e., $\alpha 2$ in the formula (4)); $L_c$ represents the characteristic length of the outer cylinder wall; $T_{WB}$ represents the first temperature of the outer cylinder wall at the first time moment; $T_{w,x}$ represents the fourth temperature of the cooling water after the heat transfer from the inner cylinder wall to the cooling water.

Then, the sixth temperature per unit volume of the cooling water after the heat exchange with the inner cylinder wall and the outer cylinder wall may be calculated according to the fourth temperature and the fifth temperature, i.e., the formula (11).

Then, the integral may be performed on the sixth temperature from 0 to x, and the temperature relation formula of the cooling water at position x is obtained, that is, the formula (12).

Then x in the formula (12) is set to the length of the cooling water, and the temperature at an end of the cooling water can be obtained, that is, the outlet water temperature, that is, the temperature of the cooling water at the second time moment.

In the embodiment of the present disclosure, an accurate temperature of the cooling water at the second time moment can be obtained by simultaneously considering the heat exchange between the inner cylinder wall and the cooling water, as well as heat exchange between the outer cylinder wall and the cooling water.

At step 240, a temperature of the outer cylinder wall at the second time moment is calculated based on the first temperature of the outer cylinder wall at the first time moment, the relation formula for the heat exchange principle between the outer cylinder wall and the cooling water, and the relation formula for the heat exchange principle between the outer cylinder wall and the external environment.

In order to accurately calculate the temperature of the outer cylinder wall at the second time moment, the above step 240 may include:

calculating a second temperature of the outer cylinder wall after heat transfer from the cooling water to the outer cylinder wall based on the first temperature of the outer cylinder wall at the first time moment, the temperature of the cooling water at the second time moment, and the relation formula for the heat exchange principle between the outer cylinder wall and the cooling water.

calculating the temperature of the outer cylinder wall after heat transfer between the outer cylinder wall and the external environment according to the second temperature and the relation formula for the heat exchange principle between the outer cylinder wall and the external environment.

The second temperature may be the temperature of the outer cylinder wall after the heat transfer from the cooling water to the outer cylinder wall.

In some embodiments of the present disclosure, based on the first temperature of the outer cylinder wall at the first time moment and the temperature of the cooling water at the second time moment, the heat exchange quantity from the cooling water to the outer cylinder wall can be calculated using the relation formula for the heat exchange principle between the outer cylinder wall and the cooling water in the formula (14).

Then, the second temperature of the outer cylinder wall after the heat transfer from the cooling water to the outer cylinder wall may be calculated using the heat exchange quantity from the cooling water to the outer cylinder wall and formula (17).

$$Q = m * C_p * dT_{WB} \qquad (17)$$

In the formula (17), Q represents the heat exchange quantity from the cooling water to the outer cylinder wall; $m$ represents the mass of the outer cylinder wall; $C_p$ represents the specific heat of the outer cylinder wall; $dT_{WB}$ represents the difference between the first temperature of the outer cylinder wall at the first time moment and the second temperature of the outer cylinder wall after the heat transfer from the cooling water to the outer cylinder wall.

Therefore, the second temperature of the outer cylinder wall after the heat transfer from the cooling water to the outer cylinder wall may be calculated using the above formula (17).

Then, a heat exchange quantity between the outer cylinder wall and the external environment is calculated according to the second temperature and the relation formula for the heat exchange principle between the outer cylinder wall and the external environment shown in formula (18).

$$Q = \alpha * A * (T_{WB} - T_{amb}) \qquad (18)$$

In the formula (18), Q represents the heat exchange quantity between the outer cylinder wall and the external environment; $\alpha$ represents the heat exchange coefficient between the outer cylinder wall and the external environment; A represents the heat conduction area of the outer cylinder wall; $T_{WB}$ represents the second temperature of the outer cylinder wall after the heat transfer from the cooling water to the outer cylinder wall; $T_{amb}$ represents the first temperature of the external environment at the first time moment.

Then the temperature of the outer cylinder wall after the heat transfer between the outer cylinder wall and the external environment may be calculated according to the heat exchange quantity between the outer cylinder wall and the external environment, and formula (19).

$$Q = m * C_p * dT_{WB} \qquad (19)$$

In the formula (17), Q represents the heat exchange quantity between the outer cylinder wall and the external environment; $m$ represents the mass of the outer cylinder wall; $C_p$ represents the specific heat of the outer cylinder wall; $dT_{WB}$ represents the difference between the second temperature of the outer cylinder wall after the heat transfer from the cooling water to the outer cylinder wall and the temperature of the outer cylinder wall after the heat transfer between the outer cylinder wall and the external environment.

In this way, the temperature of the outer cylinder wall after heat transfer between the outer cylinder wall and the external environment can be calculated using the above formula (19).

In the embodiments of the present disclosure, the second temperature of the outer cylinder wall after the heat transfer from the cooling water to the outer cylinder wall is calculated based on the first temperature of the outer cylinder wall at the first time moment, the temperature of the cooling water at the second time moment, and the relation formula for the heat exchange principle between the outer cylinder wall and the cooling water. Then the temperature of the outer cylinder wall after the heat transfer between the outer cylinder wall and the external environment can be accurately calculated according to the second temperature and the relation formula for the heat exchange principle between the outer cylinder wall and the external environment.

The temperature of the cooling system at the second time moment can be calculated according to the first temperature of the cooling system at the first time moment. Then, the temperature of the cooling system at the second time moment is taken as the first temperature of the cooling system at the first time moment, and the temperature of the cooling system at a moment with one unit time step later than the second time moment is calculated. Iteration is performed until the temperature of the cooling system at the target time moment (that is, the target temperature) is calculated.

It should be noted that the method for predicting a temperature of a cooling system of an engine provided in the embodiments of the present disclosure can be implemented by an apparatus for predicting a temperature of a cooling system of an engine, or a control module used to perform the method for predicting a temperature of a cooling system of an engine in the apparatus for predicting a temperature of a cooling system of an engine.

Based on the same invention conception as the method for predicting a temperature of a cooling system of an engine mentioned above, the present disclosure also provides an information processing device. The following introduces a detailed description of the apparatus for predicting a temperature of a cooling system of an engine provided in the embodiments of the present disclosure in combination with FIG. 4.

FIG. 4 is a block diagram of an apparatus for predicting a temperature of a cooling system of an engine based on an illustrative embodiment.

As illustrated in FIG. 4, the apparatus 400 for predicting a temperature of a cooling system of an engine may include an obtaining module 410 and a first determining module 420.

The obtaining module 410 is configured to obtain a first temperature of the cooling system of the engine at an initial time moment, operating condition parameters of an engine and a target time moment, in which the cooling system includes at least cooling water, an inner cylinder wall and an outer cylinder wall.

The first determining module 420 is configured to obtain a target temperature of the cooling system of the engine at the target time moment according to the first temperature and the operating condition parameters of the engine.

In the embodiments of the present disclosure, the first temperature of the cooling system of the engine at the initial time moment, the operating condition parameters of the engine and the target time moment are obtained by the obtaining module. Then, the first determining module may obtain the target temperature of the cooling system of the engine at the target time moment according to the first temperature and the operating condition parameters of the engine. Therefore, when calculating the target temperature of the cooling system of the engine at the target time moment, there is no need to consider the cylinder wall roughness of the engine or other immeasurable parameters caused by use of the engine. Therefore, a calculated target temperature of the cooling system of the engine at the target time moment is more accurate. When calculating the target temperature of the cooling system of the engine at the target time moment, only the first temperature of the cooling system of the engine at the initial time moment and the operating condition parameters of the engine need to be considered, without relying on too many other parameters, which saves calculation time, and improves a calculation efficiency of the target temperature of the cooling system of the engine at the target time moment.

In some embodiments of the present disclosure, in order to further improve the calculation efficiency of the target temperature of the cooling system of the engine at the target time moment, the first determining module 420 may specifically include a first determining unit and a second determining unit.

The first determining unit is configured to determine a number i of unit time steps required from the initial time moment to the target time moment according to a preset unit time step.

The second determination unit is used to perform i iteration calculations based on the first temperature and the operating condition parameters of the engine to obtain the target temperature of the cooling system of the engine at the target time moment.

The second determining unit realizes each iteration calculation by:

calculating a temperature of combustion gas of the engine at a second time moment according to operating condition parameters of the engine at a first time moment and a function relationship between the temperature of the combustion gas and the operating condition parameters of the engine; in which an initial value of the first time moment is the initial time moment, and an time interval between the first time moment and the second time moment is configured as the unit time step;

based on a first temperature of the inner cylinder wall at the first time moment and the temperature of the combustion gas at the second time moment, calculating a temperature of the inner cylinder wall at the second time moment according to a relation formula for a heat exchange principle between the inner cylinder wall and the combustion gas, and a relation formula for a heat exchange principle between the inner cylinder wall and the cooling water;

calculating a temperature of the cooling water at the second time moment based on a first temperature of the cooling water at the first time moment, the relation formula for the heat exchange principle between the inner cylinder wall and the cooling water, and a relation formula for a heat exchange principle between the cooling water and the outer cylinder wall; and

calculating a temperature of the outer cylinder wall at the second time moment based on a first temperature of the outer cylinder wall at the first time moment, the relation formula for the heat exchange principle between the outer cylinder wall and the cooling water, and a relation formula for a heat exchange principle between the outer cylinder wall and external environment.

In some embodiments of the present disclosure, in order to accurately calculate the temperature of the inner cylinder wall at the second time moment, the second determining unit can be specifically configured to:

based on the first temperature of the inner cylinder wall at the first time moment and the temperature of the combustion gas, calculate a second temperature of the inner cylinder wall after heat transfer through the combustion gas according to the relation formula for the heat exchange principle between the inner cylinder wall and the combustion gas;

calculate a third temperature of the inner cylinder wall after heat transfer from the inner cylinder wall to the cooling water based on the second temperature and a first heat exchange quantity between the inner cylinder wall and the cooling water; and

take the third temperature as the temperature of the inner cylinder wall at the second time moment.

In some embodiments of the present disclosure, in order to accurately calculate the temperature of the cooling water at the second time moment, the second determining unit can be specifically configured to:

calculate a fourth temperature of the cooling water after the heat transfer from the inner cylinder wall to the cooling water based on the first temperature of the cooling water at the first time moment and the temperature of the inner cylinder wall at the second time moment, and the relation formula for the heat exchange principle between the inner cylinder wall and the cooling water;

calculate a fifth temperature of the cooling water after heat transfer from the cooling water to the outer cylinder wall based on the fourth temperature, the first temperature of the outer cylinder wall at the first time moment, and the relation formula for the heat exchange principle between the cooling water and the outer cylinder wall;

calculate a sixth temperature per unit volume of the cooling water after heat exchange with the inner cylinder wall and the outer cylinder wall based on the fourth temperature and the fifth temperature;

obtain, for any position of the cooling water, a relation formula between the position of the cooling water and a temperature of the cooling water based on the sixth temperature; and

obtain a temperature of an outlet position of the cooling water at the second time moment based on the temperature relation formula.

In some embodiments of the present disclosure, in order to accurately calculate the temperature of the outer cylinder wall at the second time moment, the second determining unit can be specifically configured to:

calculate a second temperature of the outer cylinder wall after heat transfer from the cooling water to the outer cylinder wall based on the first temperature of the outer cylinder wall at the first time moment, the temperature of the cooling water at the second time moment, and the relation formula for the heat exchange principle between the outer cylinder wall and the cooling water; and

calculate the temperature of the outer cylinder wall after heat transfer between the outer cylinder wall and the external environment according to the second temperature and the relation formula for the heat exchange principle between the outer cylinder wall and the external environment.

In some embodiments of the present disclosure, in order to further improve the accuracy and efficiency of prediction of the temperature of the cooling system of the engine, the above-mentioned apparatus for predicting a temperature of a cooling system of an engine can may include a third determining module, a fourth determining module and the fifth determining module.

The third determining module is configured to perform fitting on historical operating condition parameters of the engine and a heat exchange coefficient between the historical operating condition parameters and combustion gas, to obtain a first correspondence relation formula of a heat exchange coefficient between the operating condition parameters of the engine and the combustion gas.

The fourth determining module is configured to perform fitting on mass flow of the cooling water and a heat exchange coefficient between the mass flow of the cooling water and a cylinder wall of the engine, to obtain a second correspondence relation formula of a heat exchange coefficient between the mass flow of the cooling water and the cylinder wall of the engine.

The fifth determining module is configured to, based on a double-layer flat plate model corresponding to the engine, perform fitting on the first correspondence relation formula and the second correspondence relation formula according to a steady-state heat exchange conservation formula between the cooling water in the engine and the combustion gas, to obtain a function relationship between a temperature of the combustion gas and the operating condition parameters of the engine.

In some embodiments of the present disclosure, in order to further improve accuracy and efficiency of prediction of the temperature of the cooling system of the engine, the fifth determining module is specifically configured to:

perform fitting on the first correspondence relation formula and the second correspondence relation formula based on a heat exchange area between the inner cylinder wall and the combustion gas, a heat exchange area between the inner cylinder wall and the cooling water and a thermal conduction area of the inner cylinder wall, to obtain a heat conduction thermal resistance relation formula of the engine;

based on the heat conduction thermal resistance relation formula and the double-layer flat plate model corresponding to the engine, perform an integral on a length of an inlet to an outlet of the inner cylinder wall in the engine according to the steady-state heat exchange conservation formula between the cooling water in the engine and the combustion gas, to obtain a third relation formula among the combustion gas, an inlet temperature of the cooling water and an outlet temperature of the cooling water; and

perform quadratic function fitting on the third relation formula and the operating condition parameters of the engine, to obtain the function relationship between the temperature of the combustion gas and the operating condition parameters of the engine.

In some embodiments of the present disclosure, the function relationship between the temperature of the combustion gas and the operating condition parameters of the engine is:

$$T_{gas} = a * n^2 - b * T^2 - c * n * T + d * n + e * T * f$$

where, $T_{gas}$ represents a virtual combustion temperature; n represents a rotational speed of the engine, and T represents a torque of the engine; and *a, b, c, d, e* and *f* are all constants determined based on a model of the engine.

The apparatus for predicting a temperature of a cooling system of an engine provided in the embodiments of the present disclosure may be configured to perform the method for predicting a temperature of a cooling system of an engine provided in the foregoing method embodiments, and the implementation principles and technical effects thereof are similar, for the sake of simplicity, which will not be repeated here.

Based on the same inventive concept, an embodiment of the present disclosure further provides a device for predicting a temperature of a cooling system of an engine. The device includes: a processor and a memory storing computer program instructions; and when the processor executes the computer program instructions, the processor implements the method for predicting a temperature of a cooling system of an engine according to any embodiment of the present disclosure.

FIG. 5 is a block diagram of a device for predicting a temperature of a cooling system of an engine according to an embodiment of the present disclosure. As shown in FIG. 5, the device for predicting a temperature of a cooling system of an engine may include a processor 501 and a memory 502 that stores a computer program or instructions.

Specifically, the processor 501 may include a central processing unit (CPU), or an application specific integrated circuit (ASIC), or one or more integrated circuits configured to implement the embodiments of the present disclosure.

The memory 502 may include a large capacity memory for data or instructions. For example, rather than as a limitation, the memory 502 can include a hard disk drive (HDD), a floppy disk drive, a flash memory, an optical disk, a magneto-optical disk, a tape or a universal serial bus (USB) drive or a combination of two or more of these. In appropriate cases, memory 502 may include removable or non-removable (or fixed) media. In appropriate cases, the memory 502 can be located inside or outside an integrated gateway disaster recovery device. In specific embodiments, memory 502 is a non-volatile solid-state memory. The memory may include read-only memory (ROM), random-access memory (RAM), disk storage media devices, optical storage media devices, flash devices, electrical, optical, or other physical/tangible memory storage devices. Therefore, typically, the memory includes one or more tangible (non-transient) computer-readable storage media (e.g., memory devices) encoded with software including computer-executable instructions, and when the software is executed (e.g., by one or more processors), it can operate to perform the operations described in the method for predicting a temperature of a cooling system of an engine provided in the above embodiments.

The processor 501 reads and executes computer program instructions stored in memory 502 to implement any of the methods for predicting a temperature of a cooling system of an engine in the above embodiments.

In one example, the device for predicting a temperature of a cooling system of an engine may further include a communication interface 503 and a bus 510. As shown in FIG. 5, the processor 501, the memory 502, and the communication interface 503 are connected through the bus 510 and complete communication with each other.

The communication interface 503 is mainly used to achieve communication between modules, devices, units, and/or devices in the embodiments of the present disclosure.

The bus 510 includes hardware, software, or both, which couples components of the device to predicting the temperature of the cooling system of the engine to each other. For example, rather than limitation, buses may include accelerated graphics port (AGP) or other graphics bus, enhanced industry standard architecture (EISA) bus, front side bus (FSB), hyper transport (HT) interconnect, industry standard architecture (ISA) bus, infinite bandwidth interconnect, low pin count (LPC) bus, memory bus, micro channel architecture (MCA) bus, peripheral component interconnect (PCI) bus, PCI-Express (PCI-X) bus, serial advanced technology attachment (SATA) bus, video electronics standards association local bus (VLB) or other suitable bus, or a combination of two or more of these. In appropriate cases, bus 510 may include one or more buses. Although the embodiments of the present disclosure describe and illustrate specific buses, any suitable bus or interconnect is considered in the present disclosure.

The device for predicting a temperature of a cooling system of an engine may perform the method for predicting a temperature of a cooling system of an engine in the embodiments of the present disclosure, so as to implement the method for predicting a temperature of a cooling system of an engine described in FIG. 1.

In addition, in combination with the method for predicting a temperature of a cooling system of an engine in the foregoing embodiments, an embodiment of the present disclosure may provide a readable storage medium. The readable storage medium stores program instructions, and the program instructions, when executed by the processor, implement any method for predicting a temperature of a cooling system of an engine in the foregoing embodiments.

In addition, in combination with the method for predicting a temperature of a cooling system of an engine in the foregoing embodiment, the embodiment of the present disclosure may be realized by providing a vehicle. The vehicle includes the apparatus for predicting a temperature of a cooling system of an engine, the device for predicting a temperature of a cooling system of an engine, and a computer readable storage medium in the above embodiments.

In addition, in combination with the method for predicting a temperature of a cooling system of an engine in the above embodiment, an embodiment of the present disclosure may provide a computer program product, including a computer program that, when executed by a processor, implements the method for predicting a temperature of a cooling system of an engine shown in any embodiment of the present disclosure.

In addition, in combination with the method for predicting a temperature of a cooling system of an engine in the above embodiment, an embodiment of the present disclosure may provide a computer program. The computer program includes computer program codes, and when the computer program codes are running on a computer, the computer is caused to perform the method for predicting a temperature of a cooling system of an engine shown in any embodiment of the present disclosure.

It should be noted that the above explanation of the embodiments of method and apparatus is also applicable to the vehicle, the computer readable storage medium, the computer program product, and the computer program in the above embodiments, and details are not described herein again.

It is to be understood that the present disclosure is not limited to the specific configurations and processes described above and illustrated in the figures. For the sake of brevity, a detailed description of known methods is omitted here. In the above embodiments, several specific steps are described and illustrated as examples. However, the process of the present disclosure is not limited to the specific steps described and illustrated, and those skilled in the art can make various changes, modifications and additions, or change the order between the steps after understanding the spirit of the present disclosure.

The functional blocks shown in the above block diagrams may be implemented as hardware, software, firmware, or a combination thereof. When implemented in hardware, it may be, for example, an electronic circuit, an ASIC, an appropriate firmware, a plug-in, a function card, and the like. When implemented in software, the elements of the present disclosure are programs or code segments that are used to perform required tasks. The program or the code segments may be stored in a machine-readable medium, or transmitted on a transmission medium or a communication link through a data signal carried in a carrier. A "machine-readable medium" may include any medium capable of storing or transmitting information. Examples of machine-readable media include electronic circuit, semiconductor memory devices, ROM, flash memory, erasable ROM (EROM), floppy disks, CD-ROMs, optical disks, hard disks, fiber optic media, radio frequency (RF) links, and the like. The code segments may be downloaded via a computer network such as Internet, Intranet, or the like.

It should also be noted that the embodiments mentioned in the present disclosure describe some methods or systems based on a series of steps or apparatuses. However, the present disclosure is not limited to the order of the above steps, that is, the steps may be performed in the order mentioned in the embodiments, or may be different from the order in the embodiments, or some steps may be performed simultaneously.

Aspects of the present disclosure are described above with reference to flowchart illustrations and/or block diagrams of methods, apparatus (systems), and computer program product according to the embodiments of the present disclosure. It will be understood that each block in the flowcharts and/or block diagrams, and combinations of blocks in the flowcharts and/or block diagrams, can be implemented by computer program instructions. These computer program instructions may be provided to a processor of a general purpose computer, a special purpose computer, or other programmable data processing apparatus to produce a machine, such that the instructions, which execute by the processor of the computer or other programmable data processing apparatus, implement functions/acts specified in one or more blocks in the flowcharts and/or block diagrams. This kind of processor can be, but is not limited to, a general purpose processor, a special purpose processor, a special application processor or a field programmable logic circuit. It is also understood that each block in the block diagram and / or flowchart and the combination of blocks in the block diagram and/or flowchart can also be implemented by a dedicated hardware that performs the specified function or action, or by a combination of the dedicated hardware and computer instructions.

It should be noted that relational terms such as "first" and "second" are used herein to distinguish one entity or operation from another entity or operation without necessarily requiring or implying any such actual relationship or order between such entities or operations. The terms "comprise" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprising one" do not preclude the presence of additional same elements in the process, method, article, or apparatus that includes the elements.

The above is only the specific embodiments of the present disclosure. Those skilled in the art may clearly understand that, for the convenience and brevity of description, the described system, module and specific working process of the unit may refer to a corresponding process in the above method embodiments, and details are not described herein again. It should be understood that the scope of protection of the present disclosure is not limited to this. Any technical personnel familiar with the technical field of this technology can easily think of various equivalent modifications or replacements within the technical scope revealed by the present disclosure. These modifications or replacements should be covered within the scope of protection of the invention.

All the embodiments of the present disclosure can be executed separately or in combination with other embodiments, which are regarded as the scope of protection required by the present disclosure.

## Claims

1. A method for predicting a temperature of a cooling system of an engine, comprising:

    obtaining a first temperature of the cooling system of the engine at an initial time moment, operating condition parameters of the engine, and a target time moment, wherein the cooling system includes at least cooling water, an inner cylinder wall and an outer cylinder wall; and
    obtaining a target temperature of the cooling system of the engine at the target time moment according to the first temperature and the operating condition parameters of the engine.

2. The method of claim 1, wherein obtaining the target temperature of the cooling system of the engine at the target time moment according to the first temperature and the operating condition parameters of the engine comprises:

    determining a number i of unit time steps required from the initial time moment to the target time moment according to the unit time step preset;
    performing i iteration calculations according to the first temperature and the operating condition parameters of the engine to obtain the target temperature of the cooling system of the engine at the target time moment;
    wherein, each iteration calculation comprises:

        calculating a temperature of combustion gas of the engine at a second time moment according to operating condition parameters of the engine at a first time moment and a function relationship between the temperature of the combustion gas and the operating condition parameters of the engine; wherein an initial value of the first time moment is the initial time moment, and an time interval between the first time moment and the second time moment is configured as the unit time step;
        based on a first temperature of the inner cylinder wall at the first time moment and the temperature of the combustion gas at the second time moment, calculating a temperature of the inner cylinder wall at the second time moment according to a relation formula for a heat exchange principle between the inner cylinder wall and the combustion gas, and a relation formula for a heat exchange principle between the inner cylinder wall and the cooling water;
        calculating a temperature of the cooling water at the second time moment based on a first temperature of the cooling water at the first time moment, the relation formula for the heat exchange principle between the inner cylinder wall and the cooling water, and a relation formula for a heat exchange principle between the cooling water and the outer cylinder wall; and

calculating a temperature of the outer cylinder wall at the second time moment based on a first temperature of the outer cylinder wall at the first time moment, the relation formula for the heat exchange principle between the outer cylinder wall and the cooling water, and a relation formula for a heat exchange principle between the outer cylinder wall and external environment.

3. The method of claim 2, wherein based on the first temperature of the inner cylinder wall at the first time moment and the temperature of the combustion gas at the second time moment, calculating the temperature of the inner cylinder wall at the second time moment according to the relation formula for the heat exchange principle between the inner cylinder wall and the combustion gas, and the relation formula for the heat exchange principle between the inner cylinder wall and the cooling water comprises:

based on the first temperature of the inner cylinder wall at the first time moment and the temperature of the combustion gas at the second time moment, calculating a second temperature of the inner cylinder wall after heat transfer through the combustion gas according to the relation formula for the heat exchange principle between the inner cylinder wall and the combustion gas;

calculating a third temperature of the inner cylinder wall after heat transfer from the inner cylinder wall to the cooling water based on the second temperature and a first heat exchange quantity between the inner cylinder wall and the cooling water; and

taking the third temperature as the temperature of the inner cylinder wall at the second time moment.

4. The method of claim 2 or 3, wherein calculating the temperature of the cooling water at the second time moment based on the first temperature of the cooling water at the first time moment, the relation formula for the heat exchange principle between the inner cylinder wall and the cooling water, and the relation formula for the heat exchange principle between the cooling water and the outer cylinder wall comprises:

calculating a fourth temperature of the cooling water after the heat transfer from the inner cylinder wall to the cooling water based on the first temperature of the cooling water at the first time moment and the temperature of the inner cylinder wall at the second time moment, and the relation formula for the heat exchange principle between the inner cylinder wall and the cooling water;

calculating a fifth temperature of the cooling water after heat transfer from the cooling water to the outer cylinder wall based on the fourth temperature, the first temperature of the outer cylinder wall at the first time moment, and the relation formula for the heat exchange principle between the cooling water and the outer cylinder wall;

calculating a sixth temperature per unit volume of the cooling water after heat exchange with the inner cylinder wall and the outer cylinder wall based on the fourth temperature and the fifth temperature;

obtaining, for any position of the cooling water, a relation formula between the position of the cooling water and a temperature of the cooling water based on the sixth temperature; and

obtaining a temperature of an outlet position of the cooling water at the second time moment based on the relation formula between the position and the temperature.

5. The method of any one of claims 2 to 4, wherein calculating the temperature of the outer cylinder wall at the second time moment based on the first temperature of the outer cylinder wall at the first time moment, the relation formula for the heat exchange principle between the outer cylinder wall and the cooling water, and the relation formula for the heat exchange between the outer cylinder wall and the external environment comprises:

calculating a second temperature of the outer cylinder wall after heat transfer from the cooling water to the outer cylinder wall based on the first temperature of the outer cylinder wall at the first time moment, the temperature of the cooling water at the second time moment, and the relation formula for the heat exchange principle between the outer cylinder wall and the cooling water; and

calculating the temperature of the outer cylinder wall after heat transfer between the outer cylinder wall and the external environment according to the second temperature and the relation formula for the heat exchange principle between the outer cylinder wall and the external environment.

6. The method of any one of claims 1 to 5, wherein before obtaining the first temperature of the cooling system of the engine at the initial time moment, the operating condition parameters of the engine, and the target time moment, the method further comprises:

performing fitting on historical operating condition parameters of the engine and a heat exchange coefficient between the historical operating condition parameters and combustion gas, to obtain a first correspondence relation formula of a heat exchange coefficient between the operating condition parameters of the engine and the combustion gas;

performing fitting on mass flow of the cooling water and a heat exchange coefficient between the mass flow of the cooling water and a cylinder wall of the engine, to obtain a second correspondence relation formula of a heat exchange coefficient between the mass flow of the cooling water and the cylinder wall of the engine; and

based on a double-layer flat plate model corresponding to the engine, performing fitting on the first correspondence relation formula and the second correspondence relation formula according to a steady-state heat exchange conservation formula between the cooling water in the engine and the combustion gas, to obtain a function relationship between a temperature of the combustion gas and the operating condition parameters of the engine.

7. The method of claim 6, wherein based on the double-layer flat plate model corresponding to the engine, performing fitting on the first correspondence relation formula and the second correspondence relation formula according to the steady-state heat exchange conservation formula between the cooling water in the engine and the combustion gas, to obtain the function relationship between the temperature of the combustion gas and the operating condition parameters of the engine comprises:

performing fitting on the first correspondence relation formula and the second correspondence relation formula based on a heat exchange area between the inner cylinder wall and the combustion gas, a heat exchange area between the inner cylinder wall and the cooling water and a thermal conduction area of the inner cylinder wall, to obtain a heat conduction thermal resistance relation formula of the engine;

based on the heat conduction thermal resistance relation formula and the double-layer flat plate model corresponding to the engine, performing an integral on a length of an inlet to an outlet of the inner cylinder wall in the engine according to the steady-state heat exchange conservation formula between the cooling water in the engine and the combustion gas, to obtain a third relation formula among the combustion gas, an inlet temperature of the cooling water and an outlet temperature of the cooling water; and

performing quadratic function fitting on the third relation formula and the operating condition parameters of the engine, to obtain the function relationship between the temperature of the combustion gas and the operating condition parameters of the engine.

8. The method of any one of claims 1 to 7, wherein the function relationship between the temperature of the combustion gas and the operating condition parameters of the engine is:

$$T_{gas} = a * n^2 - b * T^2 - c * n * T + d * n + e * T * f$$

where, $T_{gas}$ represents a virtual combustion temperature; n represents a rotational speed of the engine, and $T$ represents a torque of the engine; and *a, b, c, d, e* and *f* are all constants determined based on a model of the engine.

9. An apparatus for predicting a temperature of a cooling system of an engine, comprising:

an obtaining module, configured to obtain a first temperature of the cooling system of the engine at an initial time moment, operating condition parameters of an engine and a target time moment, wherein the cooling system comprises at least cooling water, an inner cylinder wall and an outer cylinder wall; and

a first determining module, configured to obtain a target temperature of the cooling system of the engine at the target time moment according to the first temperature and the operating condition parameters of the engine.

10. A device for predicting a temperature of a cooling system of an engine, comprising: a processor and a memory storing computer program instructions; and when the processor executes the computer program instructions, the processor implements the method for predicting the temperature of the cooling system of the engine according to any one of claims 1 to 8.

11. A computer readable storage medium, wherein the computer readable storage medium stores computer program instructions that when executed by a processor, implement the method for predicting the temperature of the cooling system of the engine according to any one of claims 1 to 8.

12. A vehicle, wherein the vehicle comprises at least one of:

the apparatus for predicting the temperature of the cooling system of the engine according to claim 9;
the device for predicting the temperature of the cooling system of the engine according to claim 10; or
the computer readable storage medium according to claim 11.

13. A computer program product comprising a computer program, wherein, the computer program is configured to execute the method of any one of claims 1 to 8 when executed by a processor.

14. A computer program, wherein the computer program comprises computer program codes, and when the computer program codes are running on a computer, the computer is caused to execute the method according to any one of claims 1 to 8.

obtaining a first temperature of the cooling system of the engine at an initial time moment, operating condition parameters of the engine, and a target time moment — step 110

obtaining a target temperature of the cooling system of the engine at the target time moment according to the first temperature and the operating condition parameters of the engine — step 120

FIG. 1

calculating a temperature of combustion gas of the engine at a second time moment according to operating condition parameters of the engine at a first time moment and a function relationship between the temperature of the combustion gas and the operating condition parameters of the engine — step 210

based on a first temperature of the inner cylinder wall at the first time moment and the temperature of the combustion gas at the second time moment, calculating a temperature of the inner cylinder wall at the second time moment according to a relation formula for a heat exchange principle between the inner cylinder wall and the combustion gas, and a relation formula for a heat exchange principle between the inner cylinder wall and the cooling water — step 220

calculating a temperature of the cooling water at the second time moment based on a first temperature of the cooling water at the first time moment, the relation formula for the heat exchange principle between the inner cylinder wall and the cooling water, and a relation formula for a heat exchange principle between the cooling water and the outer cylinder wall — step 230

calculating a temperature of the outer cylinder wall at the second time moment based on a first temperature of the outer cylinder wall at the first time moment, the relation formula for the heat exchange principle between the outer cylinder wall and the cooling water, and a relation formula for a heat exchange principle between the outer cylinder wall and external environment — step 240

FIG. 2

~300

inner side

310

320

external environment

FIG. 3

400

obtaining module ~410

first determining module ~420

FIG. 4

501 502 503

processor    memory    communication interface

510

bus

FIG. 5

## INTERNATIONAL SEARCH REPORT

| International application No. |
|---|
| **PCT/CN2023/100730** |

### A.    CLASSIFICATION OF SUBJECT MATTER

F01P11/16(2006.01)i;  F02D45/00(2006.01)i;  G06F30/20(2020.01)i

According to International Patent Classification (IPC) or to both national classification and IPC

### B.    FIELDS SEARCHED

Minimum documentation searched (classification system followed by classification symbols)

IPC: F01P, F02D, G06F

Documentation searched other than minimum documentation to the extent that such documents are included in the fields searched

Electronic data base consulted during the international search (name of data base and, where practicable, search terms used)

CNTXT, ENTXT, VEN, DWPI, CNKI: 罗克维尔斯, 水温, 水, 冷却液, 温度, 预测, 预估, 估算, 估计, 计算, 模型, 拟合, 方程, 函数, 工况, 发动机, 引擎, 速度, 转速, 负荷, 负载, 扭矩, 转矩, 时间, 间隔, 步长, water, coolant, temperature, predict, calculate, estimate, determine, model, engine, speed, load, torque, time, span, interval, step

### C.    DOCUMENTS CONSIDERED TO BE RELEVANT

| Category* | Citation of document, with indication, where appropriate, of the relevant passages | Relevant to claim No. |
|---|---|---|
| X | WO 2022034721 A1 (HITACHI ASTEMO, LTD.) 17 February 2022 (2022-02-17) description, paragraphs 2-3 and 13-88, and figures 1-7 | 1, 9-14 |
| A | CN 106438013 A (HUIZHOU DESAY SV AUTOMOTIVE CO., LTD.) 22 February 2017 (2017-02-22) entire document | 1-14 |
| A | CN 107869383 A (JILIN UNIVERSITY) 03 April 2018 (2018-04-03) entire document | 1-14 |
| A | CN 110621866 A (MITSUBISHI ELECTRIC CORP.) 27 December 2019 (2019-12-27) entire document | 1-14 |
| A | FR 2989113 A1 (PEUGEOT CITROEN AUTOMOBILES S.A.) 11 October 2013 (2013-10-11) entire document | 1-14 |
| A | US 4393365 A (NIPPONDENSO CO., LTD.) 12 July 1983 (1983-07-12) entire document | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 September 2023** | **27 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/100730**

| Patent document cited in search report | | | Publication date (day/month/year) | Patent family member(s) | | | Publication date (day/month/year) |
|---|---|---|---|---|---|---|---|
| WO | 2022034721 | A1 | 17 February 2022 | US | 2023220807 | A1 | 13 July 2023 |
| | | | | JP | 2022032184 | A | 25 February 2022 |
| | | | | CN | 115667692 | A | 31 January 2023 |
| CN | 106438013 | A | 22 February 2017 | None | | | |
| CN | 107869383 | A | 03 April 2018 | None | | | |
| CN | 110621866 | A | 27 December 2019 | WO | 2018216211 | A1 | 29 November 2018 |
| | | | | JP | 6261840 | B1 | 17 January 2018 |
| FR | 2989113 | A1 | 11 October 2013 | None | | | |
| US | 4393365 | A | 12 July 1983 | DE | 3161179 | D1 | 17 November 1983 |
| | | | | EP | 0043731 | A1 | 13 January 1982 |
| | | | | JP | S5717810 | A | 29 January 1982 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210695448